# EUROPÄISCHE PATENTSCHRIFT

(11) **EP 1 333 926 B1**
(45) Veröffentlichungstag und Bekanntmachung des Hinweises auf die Patenterteilung: **22.09.2004**
(21) Anmeldenummer: 01975951.3
(22) Anmeldetag: 29.10.2001
(51) Int. Cl.: B01L 3/14

(54) **VORRICHTUNG UND SYSTEM ZUR ABGABE BZW. AUFNAHME/ABGABE VON FLÜSSIGKEITSPROBEN**
DEVICE AND SYSTEM FOR DISPENSING OR ASPIRATING/DISPENSING LIQUID SAMPLES
DISPOSITIF ET SYSTEME DE DISTRIBUTION OU D'ABSORPTION/DISTRIBUTION D'ECHANTILLONS DE LIQUIDE

(30) Priorität: 17.11.2000 CH 225200; 29.11.2000 CH 231400; 12.12.2000 CH 241300
(43) Veröffentlichungstag der Anmeldung: 13.08.2003
(73) Patentinhaber: Tecan Trading AG, 8708 Männedorf (CH)
(72) Erfinder: INGENHOVEN, Nikolaus, CH-8708 Männedorf (CH); HODAC, Agathe, CH-8707 Uetikon a.S. (CH); SCHMID, Noa, CH-9514 Wuppenau (CH)
(74) Vertreter: Heusch, Christian
(86) Internationale Anmeldenummer: PCT/CH2001/000639
(87) Internationale Veröffentlichungsnummer: WO 2002/040165

(56) Entgegenhaltungen:
- EP-A- 1 093 856
- WO-A-00/01798
- US-A- 5 356 034
- US-A- 6 063 339
- PATENT ABSTRACTS OF JAPAN vol. 1998, no. 04, 31. März 1998 (1998-03-31) & JP 09 327628 A (ALOKA CO LTD), 22. Dezember 1997 (1997-12-22)

## Beschreibung

Die Erfindung betrifft - gemäss dem Oberbegriff des unabhängigen Anspruchs 1-eine Vorrichtung zur Abgabe bzw. Aufnahme/Abgabe von Flüssigkeitsproben mit einer Pumpe und einer Mikroejektionsvorrichtung, wobei die Mikroejektionsvorrichtung einen Impulsgenerator mit einer Kammer umfasst und mit diesem Impulsgenerator - zum Bewirken der Abgabe von Proben aus einer Flüssigkeit-Druckwellen in der Flüssigkeit erzeugbar sind, wobei die Mikroejektionsvorrichtung zudem ein Endstück und eine Flüssigkeitsleitung umfasst, welche den Impulsgenerator mit dem Endstück verbindet, wobei der Impulsgenerator einen Mikroaktuator umfasst, welcher in der gleichen Richtung agierend ausgebildet ist, in welcher die Druckwelle die Kammer verlässt. Des Weiteren betrifft diese Erfindung auch entsprechende, solche Vorrichtungen aufweisende Systeme.

Es ist bekannt, dass Tropfen mit einem Volumen von mehr als 10 µl sehr einfach aus der Luft abgegeben werden können, weil die Tropfen bei korrektem Umgang mit der Pipette von selbst die Pipettenspitze verlassen. Die Tropfengrösse wird dann durch die physikalischen Eigenschaften der Probenflüssigkeit, wie Oberflächenspannung oder Viskosität bestimmt. Die Tropfengrösse limitiert somit die Auflösung der abzugebenden Menge Flüssigkeit.

Die Aufnahme und Abgabe, d.h. das Pipettieren von Flüssigkeitsproben mit einem Volumen von weniger als 10 µl verlangt dagegen meist Instrumente und Techniken, welche die Abgabe solch kleiner Proben garantieren. Das Abgeben einer Flüssigkeit mit einer Pipettenspitze, d.h. mit dem Endstück einer Vorrichtung zur Abgabe bzw. Aufnahme/Abgabe von Flüssigkeitsproben kann aus der Luft ("from Air") oder über das Berühren einer Oberfläche geschehen. Diese Oberfläche kann die feste Oberfläche eines Gefässes ("on Tip Touch") sein, in welches die Flüssigkeitsprobe abgegeben werden soll. Es kann auch die Oberfläche einer sich in diesem Gefäss befindlichen Flüssigkeit ("on Liquid Surface") sein. Ein an das Dispensieren anschliessender Mischvorgang ist - besonders bei sehr kleinen Probenvolumina im Nano- oder gar Picoliter-Bereich - zu empfehlen, damit eine gleichmässige Verteilung des Probenvolumens in einem Diluent gewährleistet ist.

Wegwerfspitzen reduzieren wesentlich die Gefahr eines ungewollten Übertragens von Probenteilen (Kontamination). Bekannt sind einfache Wegwerfspitzen (sogenannte "Air-Displacement Tips"), deren Geometrie und Material für das genaue Abgeben von sehr kleinen Volumina optimiert ist. Die Verwendung von sogenannten "Positive-Displacement Tips", welche an ihrer Innenseite einen Pumpkolben aufweisen, ist ebenfalls bekannt.

Zum Automatisieren des Pipettierprozesses von Volumina unterhalb 10 µl müssen zwei Vorgänge voneinander unterschieden werden: Die definierte Aufnahme (Aspiration) und die anschliessende Abgabe (Dispensierung) von Flüssigkeitsproben. Zwischen diesen Vorgängen wird üblicherweise die Pipettenspitze vom Experimentator oder einem Automaten bewegt, so dass der Aufnahmeort einer Flüssigkeitsprobe von deren Abgabeort verschieden ist. Für die Genauigkeit einer Abgabe ist nur das Flüssigkeitssystem wesentlich, welches aus Pumpe (Diluter), Flüssigkeitsleitung und Endstück (Pipettenspitze) besteht. Unter den vielen möglichen Pumpen zum hochpräzisen Aspirieren und Dispensieren von Flüssigkeiten haben sich z.B. kommerziell erhältliche Geräte mit dem Namen "CAVRO XL 3000 Modular Digital Pump" bzw. "CAVRO XP 3000 plus Modular Digital Pump" bewährt, welche von der Firma Cavro Scientific Instruments Inc., Sunnyvale, Californien, USA, vertrieben werden. Solche Pumpen umfassen einen Zylinder mit einem darin beweglichen Kolben und einen Schrittmotor zum Antreiben des Kolbens. Der Schrittmotor arbeitet bei einer Spannung von 24 V und wird durch einen externen Rechner oder Mikroprozessor angesteuert. Weitere Details können z.B. aus dem Funktionsbeschrieb "Operators Manual P/N 724043C" von Cavro Scientific Instruments Inc, entnommen werden.

Aus US 5,763,278 ist eine gattungsgemässe Vorrichtung und ein entsprechendes Verfahren bekannt. Es handelt sich um ein automatisches Pipettieren von kleinen Volumina, wobei die Vorrichtung eine Pipettiernadel, einen Diluter mit einem Flüssigkeitsausgang mit einer Spritze und einem Ventil umfasst. Die Spritze umfasst einen Kolben und einen Kolbenantrieb. Eine Leitung verbindet die Nadel und den Flüssigkeitsausgang des Diluters, wobei der Diluter und die Leitung eine im Wesentlichen inkompressible Flüssigkeit enthalten. Ein Impulsgenerator ist in der Vorrichtung angeordnet und mit der inkompressiblen Flüssigkeit in der Leitung verbunden, so dass direkt in die Flüssigkeit der Leitung mechanische Impulse mit einer Kraft von mindestens 0.01 Ns abgegeben werden können. Ein solcher Impuls dient dazu, Flüssigkeit aus der Nadel zu treiben. Die Tropfengrösse wird durch einen gezielten Vorschub des Diluterkolbens definiert und der Tropfen mit einem Impuls aus der Nadel ausgeworfen. Durch die Definition des Volumens mit dem Diluter, hängt die Tropfengrösse und deren Reproduzierbarkeit von der Auflösung des Diluters ab und wird durch diesen limitiert.

Aufgabe der vorliegenden Erfindung ist es, eine Vorrichtung zur Abgabe bzw. Aufnahme/Abgabe von Flüssigkeitsproben bis in den Picoliter-Bereich vorzuschlagen, bei welcher die abgegebene Tropfengrösse und deren Reproduzierbarkeit nicht von der Auflösung des Diluters abhängt.

Diese Aufgabe wird mit den Merkmalen des unabhängigen Anspruchs 1 gelöst. Zusätzliche Merkmale ergeben sich aus den abhängigen Ansprüchen.

Die vorliegende Erfindung soll nun - an Hand von schematischen Zeichnungen, welche bevorzugte Ausführungsbeispiele illustrieren und den Umfang der vorliegenden Erfindung nicht einschränken sollen - näher erläutert werden. Dabei zeigen:
- Fig. 1: ein Schema einer Vorrichtung zur Abgabe bzw. Aufnahme/Abgabe von Flüssigkeitsproben;
- Fig. 2: einen Schnitt durch einen Impulsgenerator, gemäss einer ersten Ausführungsform;
- Fig. 3: einen Schnitt durch einen Impulsgenerator, gemäss einer zweiten Ausführungsform;
- Fig. 4: einen Schnitt durch einen Impulsgenerator, gemäss einer dritten Ausführungsform;
- Fig. 5: einen Schnitt durch ein Array Impulsgeneratoren, gemäss einer vierten Ausführungsform.

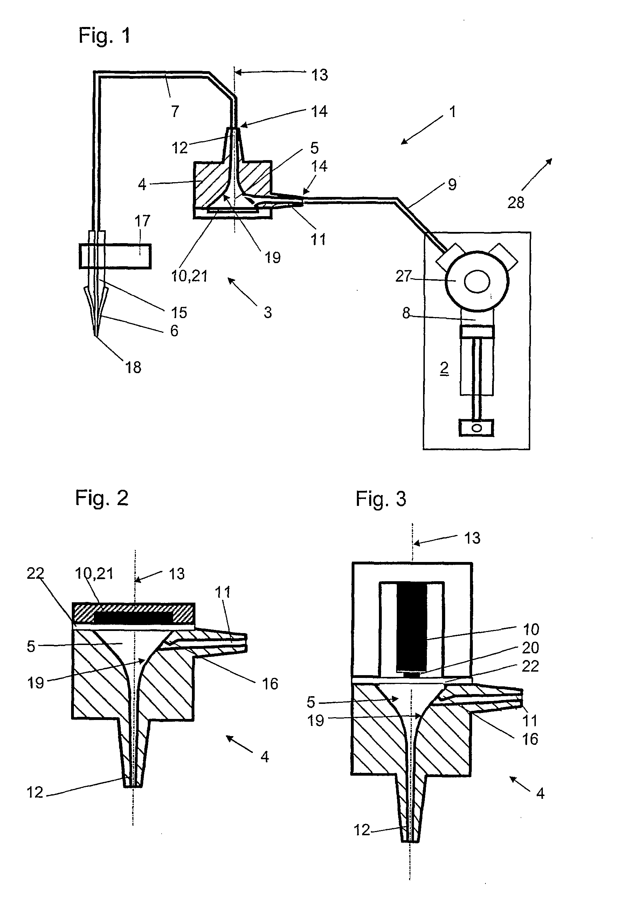

Figur 1 zeigt ein Schema einer Vorrichtung zur Abgabe bzw. Aufnahme/Abgabe von Flüssigkeitsproben, gemäss einer ersten Ausführungsform. Diese Vorrichtung 1 umfasst eine Pumpe 2 und eine Mikroejektionsvorrichtung 3. Die Mikroejektionsvorrichtung umfasst einen Impulsgenerator 4 mit einer Kammer 5 und ist vollständig mit einer Flüssigkeit gefüllt, welche somit eine zusammenhängende Flüssigkeitssäule bildet. Der Impulsgenerator 4 ist so ausgebildet, dass - zum Bewirken der Abgabe von Flüssigkeitsproben - Druckwellen in der Flüssigkeit erzeugbar sind. Die Mikroejektionsvorrichtung 3 umfasst zudem ein Endstück 6 und eine Flüssigkeitsleitung 7. Die Flüssigkeitsleitung 7 hat in einem Ausführungsbeispiel eine Länge von ca. 1 m und verbindet den Impulsgenerator 4 mit dem Endstück 6. Der Innendurchmesser dieser Leitung 7 beträgt in diesem Ausführungsbeispiel 0.8 mm und die Wanddicke misst 0.6 mm.

Vorzugsweise ist die Pumpe 2 eine Kolbenpumpe bzw. ein Diluter des Typs "CAVRO XP 3000 plus Modular Digital Pump"; der Zylinder 8 des Diluters weist ein Volumen im Bereich von 50 bis 500 µl auf und die Auflösung des Diluters liegt im Bereich von 3'000 Schritten bzw. 6'000, 12'000 oder 24'000 Teilschritten pro ganzem Hub. Der Diluter wird verwendet, um die Pipettenspitze bzw. das Endstück 6 zu füllen. Dies umfasst sowohl das Aspirieren eines Probenvolumens als auch das Kompensieren eines abgegebenen Volumens beim Dispensieren. Der Diluter bzw. die Pumpe 2 und der Impulsgenerator 4 sind über eine Flüssigkeitsleitung 9 miteinander verbunden. Der Innendurchmesser der vorzugsweise aus Tetrafluorethylen-Hexafluorpropylen-Copolymer (FEP) hergestellten Leitungen 7,9 beträgt vorzugsweise 0.1 bis 4 mm, wobei ein Durchmesser von 0.1 bis 1 mm speziell bevorzugt ist. Für alle Leitungen 7,9 ("Tubing") wird eine Wandstärke von 0.3 bis 1.2 mm bevorzugt.

Der Impulsgenerator 4 umfasst eine Kammer 5 und einen Mikroaktuator 10 und ist in der Vorrichtung 1 zur Abgabe bzw. Aufnahme/Abgabe von Flüssigkeitsproben irgendwo zwischen Diluter bzw. Pumpe 2 und Wegwerfspitze bzw. Endstück 6 angeordnet. Der Mikroaktuator 10 kann ein Piezo-Element (z.B. als Stapelaktuator oder als bimorphes Element), ein magnetisches Element oder eine thermische Aktuierung umfassen. Allen diesen Mikroaktuatoren ist gemeinsam, dass sie eine Druckwelle in der Flüssigkeit erzeugen, indem ein mechanischer Impuls auf diese Flüssigkeit übertragen wird. Während Piezo-Aktuatoren über eine plötzliche Ausdehnung wirken und magnetische Aktuatoren ein Solenoid beschleunigen, erhitzen thermische Aktuatoren plötzlich ein Gas. Dieses Gas befindet sich in einem mit einer Membran abgeschlossenen Raum und dehnt sich bei der Erwärmung schlagartig aus, so dass diese Membran bewegt und die Druckwelle auslöst wird. Die Kammer 5 hat einen Eingangskanal 11 und einen Ausgangskanal 12. Der Mikroaktuator 10 wird vorzugsweise durch ein elektrisches Rechtecksignal angesteuert.

Jeder kurze Puls dieses Rechtecksignals produziert eine plötzliche Formund/oder Lageänderung des Mikroaktuators 10, welche als ein Schlag auf die Flüssigkeit in der Kammer 5 übertragen wird. Dieser durch den Impulsgenerator 4 erzeugte Impuls, dessen Stärke Δp in einem Ausführungsbeispiel mit 0.016 Ns errechnet wurde, löst in der Flüssigkeit eine Druckwelle aus, welche sich bevorzugt in Richtung zum Ausgangskanal 12 der Kammer 5 ausbreitet und dort die Kammer 5 verlässt.

Eine bevorzugt rotationssymmetrisch ausgelegte Kammer 5, deren Symmetrieachse 13 koaxial zu dem Ausgangskanal 12 angeordnet ist, ermöglicht eine im Wesentlichen gleichmässige Ausdehnung dieser Druckwelle in der Kammer 5. Bevorzugt wird dabei der Mikroaktuator 10 so an der Kammer angeordnet, dass er in der gleichen Richtung agiert, in welcher die Druckwelle die Kammer 5 verlässt. Weil die ganze Mikroejektionsvorrichtung 3 immer vollständig mit einer zusammenhängenden Flüssigkeitssäule gefüllt ist, wird das Volumen einer abgegebenen Flüssigkeitsprobe allein durch die Parameter eines einzelnen, durch den Impulsgenerator 4 erzeugten Impulses definiert.

Zum Ermöglichen einer im Wesentlichen kontinuierlichen Ausdehnung der Druckwelle durch die Leitung 7 bis zum Endstück 6 weisen Kammer 5, Flüssigkeitsleitung 7, Endstück 6 und alle eventuell zusätzlich vorgesehenen Verbindungselemente 14 im Wesentlichen kontinuierliche Übergänge und einen ebenso konstanten Innendurchmesser auf. Dieser Innendurchmesser ist vorzugsweise immer grösser als der Öffnungsdurchmesser 18 des Endstücks 6. Unter diesen Voraussetzungen beträgt z.B. die bevorzugte Wandstärke am Ende eines das Endstück 6 tragenden Spitzenadapters 15 im Bereich des Übergangs zu der Leitung 7 und zum Endstück 6 weniger als 0.5 mm; vorzugsweise werden sämtliche anderen Übergänge zwischen Impulsgenerator 4 und Endstück 6 entsprechend angepasst.

Um die Ausbreitung der Druckwelle in Richtung der Pumpe 2 zu behindern, weist die Kammer 5 vorzugsweise im Bereich ihres dem Endstück 6 abgewandten Endes, d.h. im Bereich des Eingangskanals 11 eine Verengung 16 auf. Falls die Kammer 5 und die Leitung 9 mit einem zusätzlichen Verbindungselement 14 verbunden sind, kann auch dieses Verbindungselement 14 eine solche Verengung 16 aufweisen.

Das Endstück 6 ist als Wegwerfspitze des Typs "Air-Displacement Tip" ausgebildet, besteht aus einem beispielsweise spritzgegossenen Polymermaterial und kann nach dem Gebrauch beliebig ersetzt werden. Das Endstück 6 sitzt bevorzugt auf einem Spitzenadapter 15, der ein Stück der Leitung 7 bildet und von einem Experimentator oder einem Roboterarm 17 gehalten und geführt wird. Der Öffnungsdurchmesser 18 des Endstücks 6 bzw. der Wegwerfspitze beträgt für die Probenabgabe im Nanoliter-Bereich vorzugsweise 20 bis 150 µm. Für die Probenabgabe im Picoliter-Bereich wird ein Durchmesser von weniger als 50 µm speziell bevorzugt. Dieser Öffnungsdurchmesser 18, wie auch die übrige Geometrie des Endstücks 6, kann nach Bedarf den Eigenschaften der zu pipettierenden Flüssigkeit bzw. dem beabsichtigten Volumen der abzutrennenden Proben angepasst werden. Bei einem Ausführungsbeispiel beträgt der Öffnungsdurchmesser 18 ca. 50 µm.

Figur 2 zeigt einen Schnitt durch einen Impulsgenerator 4, entsprechend Fig. 1 und gemäss einer ersten Ausführungsform. Die Symmetrieachse 13 liegt koaxial mit dem Ausgangskanal 12. Rechtwinklig zu der Symmetrieachse 13 ist ein Mikroaktuator 10 mit einem bimorphen Piezo-Element 21 angeordnet, welcher die Kammer 5 rückseitig verschliesst. Der Eingangskanal 11 weist an seinem Übergang zur Innenwand 19 der Kammer 5 eine Verengung 16 auf.

Figur 3 zeigt einen Schnitt durch einen Impulsgenerator 4, gemäss einer zweiten Ausführungsform. Die Symmetrieachse 13 liegt koaxial mit dem Ausgangskanal 12. Rechtwinklig zu der Symmetrieachse 13 ist ein auf magnetischer Basis arbeitender Mikroaktuator 10 angeordnet. Zwischen dem als Solenoid 20 ausgebildeten Aktuator und der Kammer 5 ist eine Membran 22 - zum Übertragen der Impulse auf die Flüssigkeit in der Kammer 5 angeordnet. Diese Membran 22 verschliesst rückseitig die Kammer 5. An Stelle eines auf magnetischer Basis arbeitenden Solenoids könnte auch ein Stapel von Piezo-Elementen (nicht gezeigt) eingesetzt werden. Der Eingangskanal 11 weist an seinem Übergang zur Innenwand 19 der Kammer 5 eine Verengung 16 auf.

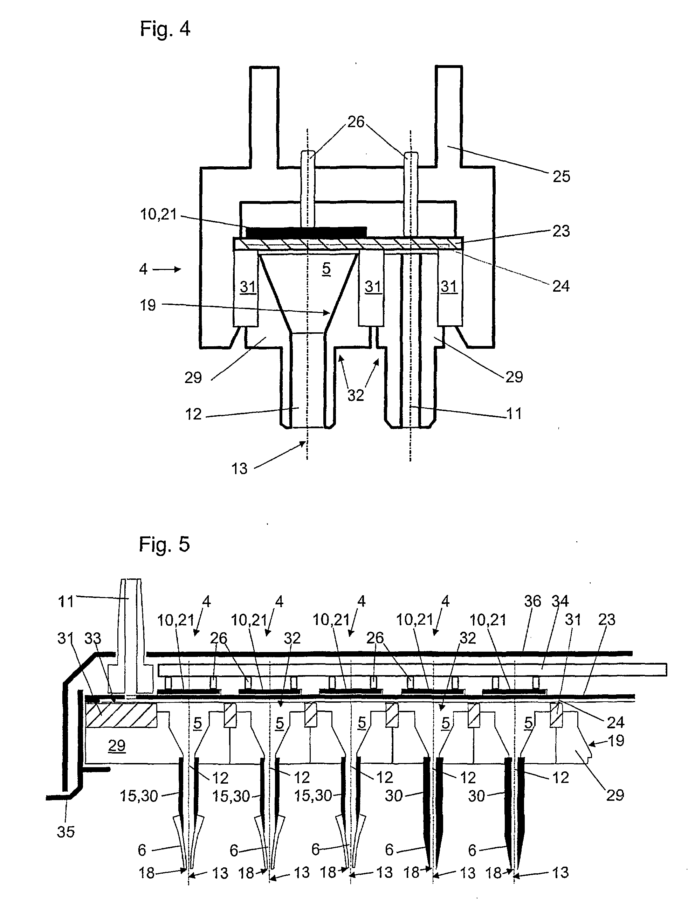

Figur 4 zeigt einen Schnitt durch einen Impulsgenerator 4, gemäss einer dritten Ausführungsform. Die Symmetrieachse 13 liegt koaxial mit dem Ausgangskanal 12. Rechtwinklig zu der Symmetrieachse 13 ist ein Piezo-Element 21 als Mikroaktuator 10 angeordnet und auf eine Siliziumplatte 23 geklebt. Die Kammer 5 ist somit rückseitig mit der Si-Platte 23 verschlossen. Die zwischen dem Mikroaktuator 10 und der Kammer 5 angeordnete Siliziumplatte 23 überträgt die Impulse auf die Flüssigkeit in der Kammer 5. Der Eingangskanal 11 ist im Gegensatz zu den vorher gezeigten Beispielen parallel zum Ausgangskanal 12 angeordnet. Der Eingangskanal 11 ist über einen in die Siliziumplatte 23 eingeätzten Verbindungskanal 24 mit der Kammer 5 verbunden. Dieser Verbindungskanal 24 weist einen sehr kleinen Querschnitt auf, so dass er neben der Funktion, die Flüssigkeit zu leiten, auch diejenige einer Verengung 16 erfüllt. Zudem ist der Innendurchmesser des Eingangskanals 11 wesentlich kleiner als derjenige des Ausgangskanals 12. Die ganze Anordnung gemäss dieser dritten Ausführungsform wird von einem Adapter 25 gehalten. Dieser Adapter umfasst auch Elektrokontakte 26 für das Piezo-Element 21 des Mikroaktuators 10, Vorzugsweise wird eine bis an die Oberseite der die Kammer 5 bildenden Bauteile 29 reichende Kompartimentierstruktur 31 dichtend mit den Bauteilen 29 verbunden. Diese Kompartimentierstruktur 31 ist vorzugsweise eine Glasplatte mit darin eingearbeiteten Kompartimenten 32 für die Aufnahme der Bauteile 29. Die Verwendung einer Glasplatte hat den Vorteil, dass eine ebene Oberfläche 33 zur Aufnahme der Siliziumplatte 23 geschaffen wird. Vorteilhafterweise können so Siliziumplatte 23 und Glasplatte - ohne jede Verwendung von Klebestoffen - anodisch miteinander verbunden werden.

Ein System zur Abgabe bzw. Aufnahme/Abgabe von Flüssigkeitsproben, wie z.B. ein Pipettierautomat, kann eine (vgl. Fig. 1) oder mehrere Vorrichtungen 1 (nicht gezeigt) umfassen. Bevorzugt sind z.B. Pipettierautomaten mit acht Kanälen, d.h. mit acht Endstücken 6, mit welchen Standard-Mikrotiterplatten™ (Handelsmarke von Beckman Coulter, Inc., 4300 N. Harbour Blvd., P.O. Box 3100 Fullerton, CA, USA 92834) bzw. Mikroplatten mit 96 Töpfchen mit Flüssigkeitsproben beschickt werden können.

Solche Systeme können die Kombination von 1 bis n Pumpen 2 und 1 bis n Impulsgeneratoren 4 in je gleicher Zahl umfassen. Ähnliche System können die Kombination einer einzigen Pumpe 2 mit mehreren Impulsgeneratoren 2 umfassen. Bevorzugt sind dabei Pipettierautomaten mit acht Kanälen, d.h. mit acht Impulsgeneratoren 4 und acht Endstücken 6. Die Endstücke 6 werden bevorzugt in einem eindimensionalen Array in Form einer Reihe angeordnet, so dass z.B. mit 8, 32, 72 oder 128 Kanälen gleichzeitig und parallel gearbeitet werden kann. Ähnliche Systeme können ein zweidimensionales Array von Endstücken 6 in Form eines Gitters aufweisen, so dass z.B. Mikroplatten mit 384, 864, 1536 oder noch mehr Töpfchen gleichzeitig beschickt werden können. Auch Kombinationen der eben genannten Systeme sind denkbar, so dass ein System gleichzeitig Endstükke 6 aufweist, die in einem linearen oder einem flächigen Array angeordnet und/oder bewegbar sind. Falls ein System mehrere Impulsgeneratoren 4 umfasst, können diese auf einem einzigen Bauteil - z.B. in Form eines Arrays von Einheiten angeordnet sein. In einer weiteren bevorzugten Ausführungsform eines erfindungsgemässen Systems zur Abgabe bzw. Aufnahme/Abgabe von Flüssigkeitsproben werden die Endstücke 6 direkt an die in einem zweidimensionalen Array und auf einem gemeinsamen Bauteil angeordneten Impulsgeneratoren 4 angesteckt (vgl. Fig. 5).

Vorzugsweise sind in solchen Systemen jeweils die einzelnen Impulsgeneratoren 4 und Pumpen 2 individuell über eine Steuerung, z.B. über einen mit entsprechender Hard- und Software ausgerüsteten Personalcomputer, adressier- und steuerbar.

Besonders für Mehrkanalsysteme mit grossem Flüssigkeitsumsatz wird ein der Pumpe 2 bzw. den Pumpen 2 vorgeschaltetes Dreiweg-Ventil 27 und zumindest ein damit verbundenes Vorratsgefäss 28 bevorzugt. In dem Vorratsgefäss kann sich Systemflüssigkeit oder auch eine zu dispensierende Flüssigkeit befinden. Bei Systemen mit mehreren Pumpen kommen bevorzugt mehrere Vorratsgefässe zur Verwendung.

Figur 5 zeigt einen Schnitt durch ein Array Impulsgeneratoren, gemäss einer vierten Ausführungsform. Die einzelnen Kammern 5 der nebeneinander angeordneten Impulsgeneratoren 4 sind in einem Bauteil 29 angeordnet, welches z.B. aus einem einstückig spritzgegossenen oder individuell aus Vollmaterial gedrehtem Polymermaterial besteht. Nadeln 30 sind koaxial mit der Symmetrieachse 13 der Kammern 5 angeordnet und bilden den Ausgangskanal 12 derselben. Vorzugsweise bestehen diese Nadeln 30 aus rostfreiem Stahl und sind an ihrem freien Ende so zugespitzt, dass sie entweder direkt als Endstücke 6, d.h. als Pipettenspitzen verwendet werden können oder dass sie je eine Wegwerfspitze aufnehmen können.

Teilweise in oder doch in engem Kontakt zu diesem Bauteil 29 ist an dessen Oberseite eine Kompartimentierstruktur 31 dichtend mit dem Bauteil 29 verbunden. Diese Kompartimentierstruktur 31 besteht vorzugsweise aus einer Glasplatte, aus welcher Kompartimente 32 so angeordnet sind, dass sie im Register mit den Kammern 5 entsprechen. Die Verwendung einer Glasplatte hat den Vorteil, dass eine ebene Oberfläche 33 geschaffen wird. Vorteilhafterweise können so Siliziumplatte 23 und Glasplatte - ohne jede Verwendung von Klebestoffen - anodisch miteinander verbunden werden. Auf diese Oberfläche 33 ist eine dünne Siliziumplatte 23 aufgebracht, in welche Verbindungskanäle 24 eingeätzt sind. Auf der den Kammern abgewandten Seite der Siliziumplatte 23 sind Mikroaktuatoren 10 in Form von Piezo-Elementen 21 angeordnet, welche in ihrer Verteilung gerade dem Muster der unterliegenden Kammeranordnung entsprechen. Die zum Auswerfen einer Probe notwendigen Impulse werden somit von dem Piezo-Elementen 21 erzeugt und über die Siliziumplatte 23 auf die Flüssigkeit in den Kammern 5 übertragen. Über die vorzugsweise einen im Verhältnis zu den Ausgangskanälen 12 kleinen Querschnitt aufweisenden Verbindungskanäle 24 sind alle Kammern 5 miteinander und mit dem Eingangskanal 11, der zum Diluter bzw. zur Pumpe 2 führt, verbunden, so dass alle diese Hohlräume sowie die Nadeln 30 (falls Wegwerfspitzen verwendet werden auch diese) immer komplett mit einer Flüssigkeitssäule gefüllt sind. Damit ist einerseits gewährleistet, dass die eine Verengung darstellenden Verbindungskanäle eine Ausdehnung der Druckwellen in Richtung der Pumpe 2 behindern und dass das Volumen der aus den Endstücken 6 abgegebenen Flüssigkeitsproben allein durch die Parameter der durch die Impulsgeneratoren 4 erzeugten Impulse definiert ist.

Die zur Ansteuerung der einzelnen Piezo-Elemente 21 notwendige Elektronik sowie die entsprechenden elektrischen Zuleitungen können auf einem gemeinsamen Bauelement 34 ebenfalls entsprechend der Verteilung der Kammern 5 und Mikroaktuatoren 10 angeordnet werden. Ein (nicht gezeigtes) Gehäuse, welches vorzugsweise aus einer unteren Halbschale 35 und einer oberen Halbschale 36 besteht, umfasst vorzugsweise das ganze Array mit den Impulsgeneratoren 4 und der zugehörigen Elektronik auf dem Bauelement 34. Ein solches Array kann eine Reihe von beispielsweise acht oder auch eine Fläche von beispielsweise 96 oder 384 Impulsgeneratoren 4 umfassen.

Ein System zur Abgabe bzw. Aufnahme/Abgabe von Flüssigkeitsproben funktioniert beispielsweise wie folgt:
1. Der Roboterarm 17 nimmt eine Wegwerfspitze von einem Aufbewahrungsort auf, wobei die konische, aufeinander angepasste Form von Spitzenadapter 15 und Wegwerfspitze eine gute Passform und Dichtung garantieren.
2. Die Wegwerfspitze wird mittels des Diluters bzw. mittels der Pumpe 2 komplett mit einer Systemflüssigkeit (z.B. mit destilliertem oder deionisiertem Wasser) gefüllt.
3. Der Roboterarm 17 bewegt sich zu einem Behälter, in welchem sich die zu pipettierende Flüssigkeit befindet und wird dort abgesenkt, bis das Endstück 6 bzw. die Pipettenspitze die Flüssigkeitsoberfläche berührt. Mit der Pumpe 2 wird ein definiertes Volumen der Flüssigkeit in das Endstück 6 aufgenommen (Aspirieren).
4. Der Roboterarm 17 bewegt sich an einen vorgesehenen Abgabeort, wo der Impulsgenerator 4 einen genau definierten, kurzen Impuls abgibt. Dies löst eine Druckwelle in der Flüssigkeit aus, welche sich in der Kammer 5 des Impulsgenerators 4 in Richtung des Ausgangskanals 12, durch die Leitung 7 und endlich durch das Endstück 6 fortpflanzt. Das Endstück 6 bildet die engste Stelle auf dem ganzen Weg, den die Druckwelle zurücklegen muss, so dass diese im Endstück 6 eine Beschleunigung erfährt. Wenn die Geschwindigkeit der Druckwelle so gross ist, dass, sie die Oberflächenspannungskräfte der Flüssigkeit überwindet, werden Probenvolumina von bestimmter und einheitlicher Grösse ausgeschleudert. Der Pipettendurchmesser, d.h. der Öffnungsdurchmesser 18 des Endstücks 6 hat einen nicht zu vernachlässigenden Einfluss auf das resultierende Probenvolumen bzw. die Tropfengrösse, welche im Bereich von 0.01 bis 10 nl liegt. Das abgegebene Totalvolumen ergibt sich aus dem Volumen einer einzelnen, abgetrennten Probe (Tropfen) und der Anzahl der durch den Impulsgenerator abgegebenen Impulse (Dispensieren).
5. Während dem Dispensieren wird der Kolben der Pumpe 2 nachgeführt, so dass zumindest im Wesentlichen das abgegebene Flüssigkeitsvolumen kompensiert wird.
6. Nach dem Abgeben einer bestimmten Menge Probenflüssigkeit bewegt der Roboterarm 17 das Endstück 6 über eine Abfallsammelstelle, wo die Wegwerfspitze abgeworfen wird. Darauf wird eine neue Spitze aufgenommen.

In allen Figuren wurden die entsprechenden Teile mit den gleichen Bezugszeichen versehen.

## Patentansprüche

1. Vorrichtung (1) zur Abgabe bzw. Aufnahme/Abgabe von Flüssigkeitsproben mit einer Pumpe (2) und einer Mikroejektionsvorrichtung (3), wobei die Mikroejektionsvorrichtung (3) einen Impulsgenerator (4) mit einer Kammer (5) umfasst und mit diesem Impulsgenerator (4) - zum Bewirken der Abgabe von Proben aus einer Flüssigkeit - Druckwellen in der Flüssigkeit erzeugbar sind, wobei die Mikroejektionsvorrichtung (3) zudem ein Endstück (6) und eine Flüssigkeitsleitung (7) umfasst, welche den Impulsgenerator (4) mit dem Endstück (6) verbindet, wobei der Impulsgenerator einen Mikroaktuator (10) umfasst, welcher in der gleichen Richtung agierend ausgebildet ist, in welcher die Druckwelle die Kammer (5) verlässt, **dadurch gekennzeichnet, dass** die Vorrichtung (1) im Bereich des dem Endstück (6) abgewandten Endes der Kammer (5) eine während dem Erzeugen der Druckwellen offene Verengung (16) aufweist, welche eine Ausdehnung der Druckwellen in Richtung der Pumpe (2) behindert.

2. Vorrichtung nach Anspruch 1, **dadurch gekennzeichnet, dass** ein entsprechendes Verbindungselement (14) die Verengung (16) aufweist.

3. Vorrichtung nach einem der vorhergehenden Ansprüche, **dadurch gekennzeichnet, dass** die ganze Mikroejektionsvorrichtung (3) vollständig mit einer zusammenhängenden Flüssigkeitssäule gefüllt ist und dass das Volumen einer abgegebenen Flüssigkeitsprobe allein durch die Parameter eines einzelnen, durch den Impulsgenerator (4) erzeugten Impulses definiert ist.

4. Vorrichtung nach einem der vorhergehenden Ansprüche, wobei die Kammer (5) des Impulsgenerators (4) zumindest eine Innenwand (19) und/oder ein Verbindungselement (14) umfasst, mit welchem die Kammer (5) mit der Flüssigkeitsleitung (7) verbunden ist, **dadurch gekennzeichnet, dass** Kammer (5), Endstück (6), Flüssigkeitsleitung (7) und/oder Verbindungselemente (14) - zum Ermöglichen einer kontinuierlichen Ausdehnung der Druckwellen durch die Leitung (7) - bis zum Endstück (6) im Wesentlichen kontinuierliche Übergänge und einen im Wesentlichen ebenso konstanten Innendurchmesser bilden, wobei dieser Innendurchmesser grösser ist als der Öffnungsdurchmesser (18) des Endstücks (6).

5. Vorrichtung nach einem der vorhergehenden Ansprüche, **dadurch gekennzeichnet, dass** Leitungen (7,9) einen Innendurchmesser von 0.1 bis 4 mm, insbesondere 0.1 bis 1 mm, und eine Wandstärke von 0.3 bis 1.2 mm aufweisen.

6. Vorrichtung nach einem der vorhergehenden Ansprüche, **dadurch gekennzeichnet, dass** das Endstück (6) als wegwerfbare und nach jedem Gebrauch ersetzbare Pipettenspitze ausgebildet ist.

7. Vorrichtung nach einem der vorhergehenden Ansprüche, **dadurch gekennzeichnet, dass** das Endstück (6) für die Abgabe von Probenvolumina im Nanoliter-Bereich einen Öffnungsdurchmesser (18) von 20 bis 150 µm aufweist.

8. Vorrichtung nach einem der vorhergehenden Ansprüche 1 bis 6, **dadurch gekennzeichnet, dass** das Endstück (6) für die Abgabe von Probenvolumina im Picoliter-Bereich einen Öffnungsdurchmesser (18) von kleiner als 50 µm aufweist.

9. Vorrichtung nach einem der vorhergehenden Ansprüche, **dadurch gekennzeichnet, dass** die Pumpe (2) - während der Abgabe von Flüssigkeitsproben aus dem Endstück (6) - zum Nachführen von Flüssigkeit ansteuerbar ausgebildet ist.

10. Vorrichtung nach einem der vorhergehenden Ansprüche, **dadurch gekennzeichnet, dass** die Pumpe (2) für die Aspiration von Flüssigkeit ansteuerbar ausgebildet ist.

11. Vorrichtung nach einem der vorhergehenden Ansprüche, **dadurch gekennzeichnet, dass** der Impulsgenerator (4) ein Solenoid (20), ein Piezo-Element (21) und/oder einen thermischen Aktuator und eine Membran (22) umfasst.

12. Vorrichtung nach einem der vorhergehenden Ansprüche, **dadurch gekennzeichnet, dass** die Pumpe (2) eine Kolbenpumpe ist, welche einen Zylinder (8), einen Kolben und einen Antrieb umfasst.

13. System mit einer Vorrichtung (1) nach einem oder mehreren der vorhergehenden Ansprüche, **dadurch gekennzeichnet, dass** es eine Vielzahl von Endstücken (6) und den dazugehörenden Leitungen (7) und Impulsgeneratoren (4) umfasst.

14. System nach Anspruch 13, **dadurch gekennzeichnet, dass** es mehrere Pumpen (2) umfasst.

15. System nach einem der Ansprüche 13 oder 14, **dadurch gekennzeichnet, dass** es ein der Pumpe (2) bzw. den Pumpen (2,2') vorgeschaltetes Dreiweg-Ventil (27) und zumindest ein damit verbundenes Vorratsgefäss (28) umfasst.

16. System nach einem oder mehreren der Ansprüche 13 bis 15, **dadurch gekennzeichnet, dass** es zur Aufnahme von Probenvolumina von mindestens 1 nl ausgebildet ist.

17. System nach einem oder mehreren der Ansprüche 13 bis 16, **dadurch gekennzeichnet, dass** es zur Abgabe von Probenvolumina von mindestens 0.01 nl ausgebildet ist.

18. System nach einem oder mehreren der Ansprüche 13 bis 17, **dadurch gekennzeichnet, dass** die einzelnen Impulsgeneratoren (4) und Pumpen (2) individuell über eine Steuerung adressierbar sind.

19. System nach einem oder mehreren der Ansprüche 13 bis 18, **dadurch gekennzeichnet, dass** es ein eindimensionales oder zweidimensionales Array von Endstücken (6) umfasst.

20. System nach einem oder mehreren der Ansprüche 13 bis 19, **dadurch gekennzeichnet, dass** die Vielzahl Impulsgeneratoren (4) auf einem einzigen Bauteil angeordnet sind.

## Claims

1. Device (1) for the dispensing or aspirating/dispensing of liquid samples with a pump (2) and a microejection device (3), the microejection device (3) incorporating a pulse generator (4) with a chamber (5), and - for the purpose of dispensing of samples of a liquid - this pulse generator (4) being able to generate pressure waves in the liquid, the microejection device (3) further incorporating an end piece (6) and a liquid pipe (7) connecting the pulse generator (4) to the end piece (6), the pulse generator (4) incorporating a microactuator (10) so designed as to act in the same direction as that in which the pressure wave leaves the chamber (5), **characterized in that** the device (1) includes a constriction (16), open during the generation of the pressure wave, in the region of that end of the chamber (5) that is turned away from the end piece (6), impeding propagation of the pressure wave in the direction of the pump (2).

2. Device according to Claim 1, **characterized in that** a corresponding connector element (14) displays the constriction (16).

3. Device according to one of the above claims, **characterized in that** the whole microejection device (3) is entirely filled with a coherent column of liquid and that the volume of a liquid sample dispensed is defined solely by the parameters of a single pulse generated by the pulse generator (4).

4. Device according to one of the above claims, the chamber (5) of the pulse generator (4) incorporating at least one inner wall (19) and/or a connector element (14) with which the chamber (5) is connected to the liquid pipe (7), **characterized in that**, in order to enable uninterrupted propagation of the pressure waves through the liquid pipe (7), the chamber (5), end piece (6), liquid pipe (7) and/or connector element (14) display transitions which are to all intents and purposes continuous and similarly an internal diameter which is to all intents and purposes constant as far as the end piece (6), this internal diameter being greater than the diameter of the opening (18) of the end piece (6).

5. Device according to one of the above claims, **characterized in that** the tubes (7,9) have an internal diameter of 0.1 to 4 mm, especially 0.1 to 1 mm, and a wall thickness of 0.3 to 1.2 mm.

6. Device according to one of the above claims, **characterized in that** the end piece (6) takes the form of a disposable pipette tip that can be replaced each time it has been used.

7. Device according to one of the above claims, **characterized in that** the end piece (6) for the dispensing of sample volumes in the nanolitre range has a diameter of the opening (18) of 20 to 150 µm.

8. Device according to one of the above claims 1 to 6, **characterized in that** the end piece (6) for the dispensing of sample volumes in the picolitre range has a diameter of the opening (18) of less than 50 µm.

9. Device according to one of the above claims, **characterized in that** the pump (2) is so designed that it can be actuated by a controller to make up the quantity of liquid during dispensing of liquid samples from the end piece (6).

10. Device according to one of the above claims, **characterized in that** the pump (2) for aspiration of liquid can be actuated by a controller.

11. Device according to one of the above claims, **characterized in that** the pulse generator (4) incorporates a solenoid (20), a piezo-element (21) and/or a thermal actuator and a membrane (22).

12. Device according to one of the above claims, **characterized in that** the pump (2) is a piston pump including a cylinder (8), a piston and a drive.

13. System with a device (1) according to one or more of the above claims, **characterized in that** it incorporates a plurality of end pieces (6) and the associated liquid ducts (7) and pulse generators (4).

14. System according to Claim 13, **characterized in that** it incorporates a plurality of pumps (2).

15. System according to one of Claims 13 or 14, **characterized in that** it incorporates a three-way valve (27), with at least one reservoir tank (28) connected to it, arranged in series with the pump (2) or pumps (2, 2').

16. System according to one or more of Claims 13 to 15, **characterized in that** it is designed to take up sample volumes of at least 1 nl.

17. System according to one or more of Claims 13 to 16, **characterized in that** it is designed to dispense sample volumes of at least 0.01 nl.

18. System according to one or more of Claims 13 to 17, **characterized in that** each of the pulse generators (4) and pumps (2) can be addressed individually through a controller.

19. System according to one or more of Claims 13 to 18, **characterized in that** incorporates a one or two-dimensional array of end pieces (6).

20. System according to one or more of Claims 13 to 19, **characterized in that** the plurality of pulse generators (4) are all arranged on a single component.

## Revendications

1. Dispositif (1) de distribution ou d'absorption/distribution d'échantillons liquides doté d'une pompe (2) et d'un dispositif micro-éjecteur (3), le dispositif micro-éjecteur (3) comprenant un générateur d'impulsions (4) équipé d'une chambre (5); grâce au générateur d'impulsions (4), lequel permet de réaliser la distribution d'échantillons provenant d'un liquide, il est possible de créer des ondes de pression dans le liquide; le dispositif micro-éjecteur (3) comprenant en outre un embout (6) ainsi qu'une conduite pour liquide (7), cette dernière reliant le générateur d'impulsions (4) à l'embout (6), comprend également un micro-actuateur (10), lequel est conçu pour agir dans le même sens que l'onde de pression quittant la chambre ; ce dispositif (1) étant **caractérisé en ce que** celui-ci présente, au niveau de l'extrémité de la chambre (5) détournée de l'embout (6), une partie rétrécie (16) étant ouverte pendant l'émission de l'onde de pression et entravant la propagation de ladite onde de pression en direction de la pompe (2).

2. Dispositif, selon la revendication 1, **caractérisé en ce qu'**un élément de raccordement (14) présente ladite partie rétrécie (16).

3. Dispositif, selon l'une des revendications précédentes, **caractérisé en ce que** l'ensemble du dispositif micro-éjecteur (3) est rempli par une colonne continue de liquide et que le volume provenant d'un échantillon liquide ainsi distribué peut être individuellement défini par les paramètres d'une seule impulsion produite par le générateur d'impulsions (4).

4. Dispositif, selon l'une des revendications précédentes, dont la chambre (5) du générateur d'impulsions (4) comprend au moins une paroi intérieure (19) et/ou un élément de raccordement (14) grâce auquel ladite chambre (5) se trouve reliée à la conduite pour liquide (7), **caractérisé en ce que** la chambre (5), l'embout (6), la conduite pour liquide (7) et/ou les éléments de raccordement (14) aboutissant audit embout (6), et permettant une propagation continue de l'onde de pression à travers la conduite (7), forment des points de transition et de passage continus et présentent un diamètre intérieur également et principalement constant, ce diamètre intérieur étant plus important que n'est le diamètre d'ouverture (18) de l'embout (6).

5. Dispositif, selon l'une des revendications précédentes, **caractérisé en ce que** les conduites (7, 9) présentent un diamètre intérieur allant de 0,1 à 4 mm, et plus particulièrement de 0,1 à 1 mm, ainsi qu'une épaisseur de paroi allant de 0,3 à 1,2 mm.

6. Dispositif, selon l'une des revendications précédentes, **caractérisé en ce que** l'embout (6) est conçu comme pointe jetable de pipette pouvant être remplacée après chaque utilisation.

7. Dispositif, selon l'une des revendications précédentes, **caractérisé en ce que** l'embout (6), destiné à la distribution de volumes d'échantillonnage exprimés en nanolitres, présente un diamètre d'ouverture (18) allant de 20 à 150 µm.

8. Dispositif, selon l'une des revendications 1 à 6 précédentes, **caractérisé en ce que** l'embout (6), destiné à la distribution de volumes d'échantillonnage exprimés en picolitres, présente un diamètre d'ouverture (18) inférieur à 50 µm.

9. Dispositif, selon l'une des revendications précédentes, **caractérisé en ce que** la pompe (2), lors de la distribution d'échantillons liquides provenant de l'embout (6), est conçue pour être commandée de sorte principalement à compenser le volume de liquide distribué.

10. Dispositif, selon l'une des revendications précédentes, **caractérisé en ce que** la pompe (2) est conçue pour être commandée et permettre une aspiration du liquide.

11. Dispositif, selon l'une des revendications précédentes, **caractérisé en ce que** le générateur d'impulsions (4) intègre un solénoïde (20), un élément piézo-électrique (21) et/ou un actuateur thermique et une membrane (22).

12. Dispositif, selon l'une des revendications précédentes, **caractérisé en ce que** la pompe (2) est une pompe à piston comprenant un cylindre (8), un piston et un dispositif d'actionnement.

13. Système équipé d'un dispositif (1), selon l'une des revendications précédentes, **caractérisé en ce que** ledit système comprend une multitude d'embouts (6) et de conduites (7) y appartenant ainsi que des générateurs d'impulsions (4).

14. Système, selon la revendication 13, **caractérisé en ce que** celui-ci comprend plusieurs pompes (2).

15. Système, selon l'une des revendications 13 ou 14, **caractérisé en ce que** celui-ci comprend une soupape à trois voies (27) montée en amont de la pompe (2) ou des pompes (2,2') ainsi qu'au moins un réservoir (28) associé à celle-ci.

16. Système, selon l'une ou plusieurs des revendications 13 à 15, **caractérisé en ce que** celui-ci est conçu pour le prélèvement de volumes d'échantillonnage d'au moins 1 nl.

17. Système, selon l'une ou plusieurs des revendications 13 à 16, **caractérisé en ce que** celui-ci est conçu pour la distribution de volumes d'échantillonnage d'au moins 0,01 nl.

18. Système, selon l'une ou plusieurs des revendications 13 à 17, **caractérisé en ce que** chacun des générateurs d'impulsions (4) et chacune des pompes (2) est adressable séparément par le biais d'un dispositif de commande.

19. Système, selon l'une ou plusieurs des revendications 13 à 18, **caractérisé en ce que** celui-ci comprend un regroupement unidimensionnel ou bidimensionnel d'embouts (6).

20. Système, selon l'une ou plusieurs des revendications 13 à 19, **caractérisé en ce que** la multitude des générateurs d'impulsions (4) est disposée sur un seul et même élément de construction.
